# FASCICULE DE BREVET EUROPEEN

(11) **EP 0 595 727 B1**
(45) Date de publication et mention de la délivrance du brevet: **10.07.1996**
(21) Numéro de dépôt: 93402673.3
(22) Date de dépôt: 29.10.1993
(51) Int. Cl.: F16F 13/00

(54) **Perfectionnements aux supports antivibratoires hydrauliques**
Verbesserungen an vibrationsdämpfenden hydraulischen Stützen
Improvements to vibration - damping hydraulical supports

(30) Priorité: 30.10.1992 FR 9213035
(43) Date de publication de la demande: 04.05.1994
(73) Titulaire: HUTCHINSON, F-75384 Paris Cédex 08 (FR)
(72) Inventeur: Bouhier, Bernard, F-41140 Noyers/Cher (FR)
(74) Mandataire: Burbaud, Eric

(56) Documents cités:
- FR-A- 2 671 839
- PATENT ABSTRACTS OF JAPAN vol. 9, no. 231 (M-414)(1954) 18 Septembre 1985 & JP-A-60 088 242 (TOYOTA JIDOSHA K.K.) 18 Mai 1985
- PATENT ABSTRACTS OF JAPAN vol. 11, no. 6 (M-551)(2453) 8 Janvier 1987 & JP-A-61 184 244 (TOKAI RUBBER IND. LTD.)

## Description

L'invention est relative aux supports antivibratoires hydrauliques du type à débattements axiaux comprenant :
- une embase rigide centrale de révolution autour d'un axe X,
- une armature rigide annulaire d'axe X,
- une première paroi élastique annulaire reliant l'embase à l'armature,
- une seconde paroi élastique portée par l'armature et délimitant avec elle, l'embase et la première paroi, une chambre étanche,
- une cloison disposée à l'intérieur de la chambre de façon à diviser celle-ci en deux poches,
- un passage étranglé disposé dans une portion rigide de la cloison et faisant communiquer en permanence les deux poches entre elles,
- et une masse liquide remplissant les deux poches ainsi que le passage étranglé.

De tels supports sont destinés à être interposés entre deux éléments rigides, tels que par exemple un châssis de véhicule et le moteur de ce véhicule ou une biellette faisant partie d'un train de suspension dudit véhicule, en vue d'amortir la transmission des oscillations ou vibrations de l'un de ces éléments à l'autre.

Leur fonctionnement est le suivant : l'application d'une oscillation sur l'une des deux pièces constituées par l'embase et l'armature par rapport à l'autre selon la direction axiale de ces pièces a pour effet de déformer alternativement les deux chambres en refoulant alternativement du liquide d'une chambre à l'autre à travers le passage étranglé et, pour une valeur prédéterminée de la fréquence des oscillations, le volume de liquide présent dans ledit passage étranglé est soumis à un phénomène de résonance qui a pour effet d'assurer efficacement l'amortissement désiré.

Dans des modes de réalisation perfectionnés des supports du genre en question, on trouve en outre, portés par la cloison intermédiaire, des moyens propres à filtrer certaines vibrations à fréquence relativement elevée, moyens constitués par un élément monté en travers d'un orifice faisant communiquer les deux chambres de façon à pouvoir vibrer.

Les vibrations de cet élément, appelé souvent élément de découplage haute fréquence", ont pour effet de filtrer efficacement certaines des vibrations de même fréquence engendrées sur l'embase et/ou sur l'armature en empêchant ainsi leur transmission entre ces deux pièces.

Dans les modes de réalisation connus de ces moyens de découplage, l'élément est en général constitué par une plaquette ou membrane emprisonnée entre deux grilles ou plaques perforées qui délimitent chacune une portion de l'une des deux chambres.

Bien que certains de ces modes de réalisation donnent satisfaction dans la pratique, certains autres ne sont pas tout à fait satisfaisants en ce sens que les applications chroniques de l'élément sur les grilles qui limitent ses débattements peuvent être une source de bruits désagréables du genre des claquements.

La présente invention a pour but, surtout, de supprimer cet inconvénient.

A cet effet, les supports antivibratoires hydrauliques du genre en question selon l'invention sont essentiellement caractérisés en ce qu'ils comprennent, d'une part, au moins un tunnel évidé dans une portion rigide de la cloison intermédiaire et s'étendant selon un arc de cercle centré sur l'axe commun à l'embase à l'armature, tunnel dont les deux extrémités communiquent respectivement avec les deux chambres et, d'autre part, un coulisseau en forme de banane logé dans ce tunnel et pouvant coulisser librement angulairement entre les deux etrémités le long de celui-ci.

En ce point de la description, il convient de rappeler que l'on a déjà proposé de constituer un clapet "de découplage" par au moins une tuile cylindrique propre à osciller angulairement dans un logement complémentaire.

Mais dans les modes de réalisation proposés (document FR-A-2 619 180), le support considéré était d'un type à débattements diamétraux et le déplacement des tuiles était effectué selon un plan parallèle à la direction des vibrations à filtrer et non pas, comme dans le cas présent, dans un plan perpendiculaire à la direction des vibrations à filtrer : cette dernière conception ne semblait pas naturelle et donc réalisable avec intérêt avant la présente invention, contrairement à ce que démontre l'expérience.

Dans des modes de réalisation avantageux, on a recours en outre à l'une et/ou à l'autre des dispositions suivantes :
- le passage étranglé est délimité essentiellement par une rainure s'étendant selon un arc de cercle et réservée entre le coulisseau et le tunnel,
- le support comprend, d'une part, deux tunnels tels que définis ci-dessus, s'étendant chacun selon un demi-cercle et symétriques l'un de l'autre par rapport à un plan axial et, d'autre part, deux coulisseaux tels que définis ci-dessus logés respectivement dans les deux tunnels,
- le support est d'un type à axe traversant pour lequel l'embase rigide centrale est un tronçon tubulaire interne, l'armature rigide annulaire est un tronçon tubulaire externe entourant le tronçon tubulaire interne, les deux parois élastiques sont des bagues interposées entre les deux tronçons tubulaires, à leurs deux extrémités axiales, et la cloison intermédiaire est une rondelle qui comprend elle-même un anneau élastique et un anneau rigide s'entourant mutuellement,
- le support selon l'alinéa précédent est réalisé conformément aux enseignements du document FR-A-2 682 731, publié après la date de priorité de la demande présente, selon lesquels, d'une part, les deux bagues élastiques sont interposées radialement entre les deux tronçons tubulaires qu'elle relie entre eux de façon à travailler essentiellement au cisaillement lors des déplacements relatifs axiaux de ces deux tronçons, et d'autre part, ces deux bagues élastiques sont totalement décalées radialement par rapport à l'anneau élastique qui constitue en partie la rondelle intermédiaire, les projections axiales desdites bagues et dudit anneau ne se recouvrant donc pas, même en partie.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

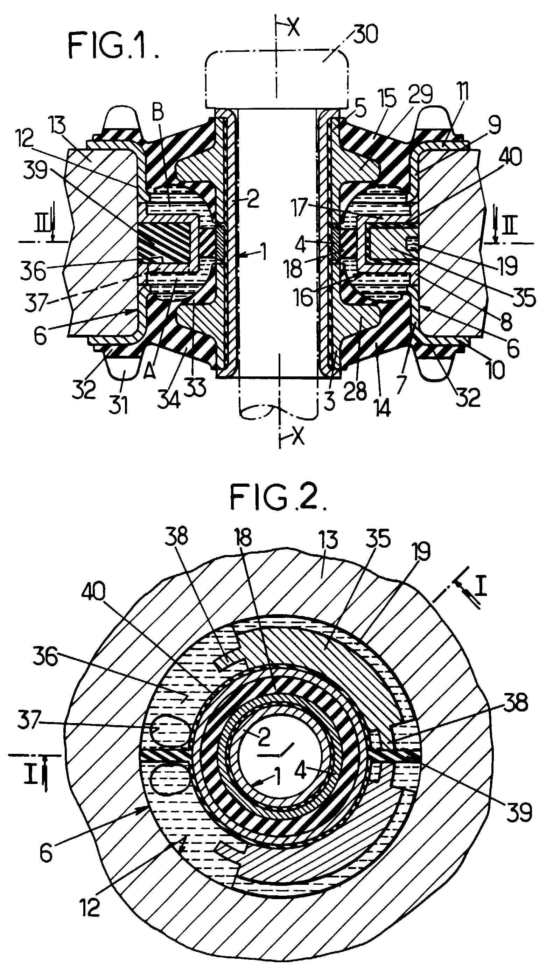

Les figures 1 et 2, de ce dessin, montrent respectivement en coupe axiale selon I-I figure 2 et en coupe transversale selon II-II figure 1, un support antivibratoire hydraulique établi selon l'invention.

Ledit support présente une forme générale de révolution autour d'un axe vertical et comprend :
- une armature tubulaire rigide intérieure 1 comprenant un tronçon de tube 2 et trois colliers cylindriques 3, 4 et 5 entourant jointivement ledit tronçon, ces trois colliers étant juxtaposés axialement les uns contre les autres et maintenus ainsi par sertissage vers l'extérieur des extrémités du tronçon de tube,
- une armature tubulaire rigide extérieure 6 comprenant trois colliers cylindriques 7,8 et 9 juxtaposés axialement dont les deux extrêmes 7 et 9 sont prolongés radialement par des collerettes extérieures 10 et 11 et sont emmanchés à force dans respectivement les deux extrémités axiales d'un alésage 12 évidé dans une pièce 13,
- une bague élastique 14 adhérée intérieurement sur le collier 3 et extérieurement sur le collier 7,
- une bague élastique 15 adhérée intérieurement sur le collier 5 et extérieurement sur le collier 9,
- un liquide L remplissant la poche annulaire constituée par l'ensemble des armatures tubulaires rigides 1 et 6 et des bagues 14 et 15,
- et une cloison annulaire intermédiaire 16 immergée dans la poche ci-dessus définie et reliant radialement entre eux de manière étanche les deux colliers 4 et 8 de façon à diviser la poche annulaire en deux chambres annulaires A et B.

La cloison 16 comprend elle-même :
- un anneau rigide 17 prolongeant intérieurement le collier 8 et faisant bloc avec lui,
- et un anneau élastique 18 reliant radialement de façon étanche le bord intérieur de l'anneau 17 au collier 4.

Un canal étroit 19 évidé dans l'anneau 17 fait communiquer en permanence les deux poches A et B.

On voit encore sur la figure 1 :
- des bourrelets annulaires extérieurs rigides radiaux 28,29 faisant corps avec les colliers 3 et 5 et débordant radialement vers l'extérieur jusqu'à une distance, de l'axe X, supérieure au rayon intérieur de l'anneau 16 conformément aux enseignements du document FR-A-2 682 731,
- un axe épaulé 30 -représenté en traits mixtes- qui traverse jointivement le tronçon de tube 2 et qui constitue l'un des deux éléments rigides entre lesquels on désire amortir le transfert des vibrations, l'autre élément rigide étant la pièce 13, ces deux éléments 30 et 13 étant eux-mêmes solidarisés de toute façon désirable avec respectivement deux ensembles appropriés tels qu'un châssis de véhicule et que le moteur à combustion interne ou un train de suspension de ce véhicule,
- et des bossages 31 venus de moulage avec les bagues élastiques 14 et 15 et faisant saillie axialement sur des rondelles 32 également venues de moulage avec lesdites bagues et recouvrant les collerettes 10 et 11, lesdites bagues pouvant servir de butées de fin de course axiale en venant en contact avec des portées en regard solidaires de l'élément 30.

On voit également sur cette figure 1 que les bourrelets 28,29 sont eux-mêmes enrobés par des voiles annulaires 33,34 prolongeant radialement vers l'intérieur les bagues élastiques 14 et 15 et venus de moulage avec ces dernières.

On prévoit en outre des moyens, dits "de découplage", pour empêcher la transmission, de l'une des armatures 1 et 6 à l'autre, de certaines vibrations axiales de relativement haute fréquence et faible amplitude.

Ces moyens sont du type connu en soi comprenant un coulisseau flottant dont deux faces opposées communiquent respectivement avec les deux chambres A et B et dont l'amplitude des débattements est limitée.

Le coulisseau en question est ici constitué par au moins une pièce incurvée en forme de banane 35 s'étendant selon un arc de cercle centré sur l'axe X et logée jointivement dans un tunnel 36 de forme complémentaire lui-même évidé dans l'anneau rigide 17, de façon à pouvoir coulisser librement le long de ce tunnel, autour de l'axe X, les deux extrémités dudit tunnel débouchant respectivement dans les deux chambres A et B à travers des embouchures appropriées de relativement grandes sections dont l'une est visible en 37 sur les figures 1 et 2.

Chaque banane 35 est prolongée à ses deux extrémités par des pattes plus étroites 38 propres à venir buter en fin de course contre les fonds en regard du tunnel 36 sans que la banane obstrue les embouchures correspondantes 37.

Ces fonds sont avantageusement tapissés ou constitués par une couche d'élastomère 39, ce qui supprime les bruits dus aux butées de fin de course.

Dans le mode de réalisation illustré, on trouve une paire de tunnels 36 s'étendant chacun sur un demi-cercle et symétriques l'un de l'autre par rapport à un plan axial du manchon, ces deux tunnels contenant respectivement deux bananes 35 identiques.

Avec un tel système, les vibrations de relativement petite amplitude et relativement haute fréquence appliquées axialement entre les deux armatures 1 et 6 se traduisent par des vibrations angulaires des bananes 35 dans leurs tunnels, vibrations qui ont pour effet de filtrer la transmission des vibrations axiales ci-dessus entre les deux armatures.

Avec un tel mode de réalisation, il est avantageux de constituer le passage étranglé 19 par une rainure s'étendant selon un arc de cercle et réservée entre chaque banane et la face en regard du tunnel dans laquelle elle est logée, cette rainure pouvant être évidée dans la banane elle-même, comme illustré, ou au contraire dans la paroi en regard.

On voit encore sur les figures 1 et 2 que toutes les parois, de chaque tunnel 36, autres que celle constituant en partie le passage étranglé, sont tapissées par une couche 40 en élastomère, ce qui peut contribuer au rattrapage des jeux et au silence des coulissements angulaires des bananes 35 dans les tunnels 36.

Pour faciliter les coulissements de ces bananes, on revêt avantageusement celles-ci et/ou les faces en regard du tunnel qui viennent en contact avec elles d'une couche à bas coefficient de frottement, par exemple en polytétrafluoroéthylène (Téflon).

En suite de quoi, et quel que soit le mode de réalisation adopté, on obtient finalement des supports antivibratoires hydrauliques dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où les positions relatives intérieure et extérieure des portions rigides et des portions élastiquement déformables comprises par les bagues 14 et 15 et par la rondelle 16 seraient inversées par rapport à celles décrites et illustrées ci-dessus,
- celles où le support considéré serait d'un type à débattements axiaux mais sans "axe traversant", la première armature tubulaire 1 ci-dessus étant alors remplacée par un plot central, l'une des deux bagues élastiques 14 et 15 ci-dessus, par un soufflet flexible non évidé centralement et porté par la seconde armature 2 et le double anneau 17,18 ci-dessus, par une cloison rigide pleine juste évidée par le (ou les) tunnel(s) 36,
- et celles où le support considéré comprendrait encore deux bananes comme dans le mode de réalisation ci-dessus décrit et illustré, mais où ces deux bananes et/ou leurs logements en tunnel seraient différents, les courses des débattements des deux bananes étant par exemple différentes et/ou les sections des deux gorges constituant les passages étranglés, ce qui permettrait de "caler" les deux bananes sur deux fréquences différentes et/ou deux amplitudes différentes des oscillations à amortir.

## Revendications

1. Support antivibratoire hydraulique du type à débattements axiaux comprenant une embase rigide centrale (1) de révolution autour d'un axe X, une armature rigide annulaire (6) d'axe X, une première paroi élastique annulaire (14) reliant l'embase (1) à l'armature (6), une seconde paroi élastique (15) portée par l'armature (6) et délimitant avec elle, l'embase et la première paroi, une chambre étanche, une cloison (16) disposée à l'intérieur de la chambre de façon à diviser celle-ci en deux poches (A,B), un passage étranglé (19) disposé dans une portion rigide de la cloison et faisant communiquer en permanence les deux poches entre elles, et une masse liquide remplissant les deux poches ainsi que le passage étranglé, caractérisé en ce qu'il comprend, d'une part, au moins un tunnel (36) évidé dans une portion rigide de la cloison intermédiaire (16) et s'étendant selon un arc de cercle centré sur l'axe X, tunnel dont les deux extrémités communiquent respectivement avec les deux chambres (A,B) et, d'autre part, un coulisseau (35) en forme de banane logé dans ce tunnel et pouvant coulisser librement angulairement entre les deux extrémités le long de celui-ci.

2. Support selon la revendication 1, caractérisé en ce que le passage étranglé (19) est délimité essentiellement par une rainure s'étendant selon un arc de cercle et réservée entre le coulisseau (35) et le tunnel (36).

3. Support selon l'une quelconque des précédentes revendications, caractérisé en ce qu'il comprend, d'une part, deux tunnels (36) tels que définis ci-dessus, s'étendant chacun selon un demi-cercle et symétriques l'un de l'autre par rapport à un plan axial et, d'autre part, deux coulisseaux (35) tels que définis ci-dessus logés respectivement dans les deux tunnels.

4. Support selon l'une quelconque des revendications 1 et 2, caractérisé en ce qu'il comprend, d'une part, deux tunnels (36) tels que définis ci-dessus et, d'autre part, deux coulisseaux (35) tels que définis ci-dessus logés respectivement dans les deux tunnels, certaines des dimensions comparables de ces deux tunnels et/ou de ces deux coulisseaux étant différentes.

5. Support selon l'une quelconque des précédentes revendications, caractérisé en ce qu'il est d'un type à axe traversant pour lequel l'embase rigide centrale (1) est un tronçon tubulaire interne, l'armature rigide annulaire (2) est un tronçon tubulaire externe entourant le tronçon tubulaire interne, les deux parois élastiques (14,15) sont des bagues interposées entre les deux tronçons tubulaires, à leurs deux extrémités axiales, et la cloison intermédiaire (16) est une rondelle qui comprend elle-même un anneau élastique (18) et un anneau rigide (17) s'entourant mutuellement.

6. Support selon la revendication 5, caractérisé en ce que, d'une part, les deux bagues élastiques (14,15) sont interposées radialement entre les deux tronçons tubulaires (1,2) qu'elles relient entre eux de façon à travailler essentiellement au cisaillement lors des déplacements relatifs axiaux de ces deux tronçons, et en ce que d'autre part, ces deux bagues élastiques sont totalement décalées radialement par rapport à l'anneau élastique (18) qui constitue en partie la rondelle intermédiaire, les projections axiales desdites bagues et dudit anneau ne se recouvrant donc pas, même en partie.

7. Support selon l'une quelconque des précédentes revendications, caractérisé en ce que les parois, du tunnel (36), autres que celle constituant en partie le passage étranglé, sont tapissées par une couche (40) en élastomère.

8. Support selon l'une quelconque des précédentes revendications, caractérisé en ce que le coulisseau (35) et/ou les faces en regard du tunnel (36) sont revêtues d'une couche à bas coefficient de frottement.

## Patentansprüche

1. Hydraulisches Antischwingungslager mit axialer Verschiebbarkeit, das aus folgenden Teilen besteht: einem starren, mittleren Sockel (1) in umdrehender Form um die Achse X, einer starren, ringförmigen Armatur (6) mit der Achse X, einer ersten ringförmigen, elastischen Wandung (14), die den Sockel (1) mit der Armatur (6) verbindet, einer zweiten elastischen Wandung (15), die von der Armatur (6) gehalten wird und mit dieser, dem Sockel und der ersten Wandung eine dichte Kammer begrenzt, einer Zwischenwand (16), die im Inneren der Kammer so angeordnet ist, daß sie diese in zwei Taschen (A, B) unterteilt, einem verengten Durchgang (19), der in einem starren Abschnitt der Zwischenwand angeordnet ist und die beiden Taschen dauernd miteinander verbindet, und einer flüssigen Masse, die die beiden Taschen ebenso wie den verengten Durchgang ausfüllt, dadurch gekennzeichnet, daß das Lager einerseits wenigstens einen Tunnel (36), der in einem starren Abschnitt der Zwischenwand (16) ausgenommen ist und sich längs eines Kreisbogens erstreckt, der auf die Achse X zentriert ist, wobei die beiden Enden des Tunnels jeweils mit einer der beiden Kammern (A, B) in Verbindung stehen, und andererseits einen Schieber (35) enthält, der die Form einer Banane hat, in dem Tunnel angeordnet ist und sich winkelig frei zwischen den beiden Enden längs des Tunnels verschieben kann.

2. Hydraulisches Antischwingungslager nach Anspruch 1, dadurch gekennzeichnet, daß der verengte Durchgang (19) im wesentlichen durch eine Rinne begrenzt wird, die sich längs eines Kreisbogens erstreckt und zwischen dem Schieber (35) und dem Tunnel (36) angeordnet ist.

3. Hydraulisches Antischwingungslager nach einem der vorhergehenden Ansprüche, dadurch gekennzeichnet, daß es einerseits zwei Tunnel (36) der oben beschriebenen Art, die sich beide gemäß eines Halbkreises und symmetrisch zueinander in bezug auf eine axiale Ebene erstrecken, und andererseits zwei Schieber (35) der oben beschriebenen Art enthält, die jeweils in einem der beiden Tunnel angeordnet sind.

4. Hydraulisches Antischwingungslager nach einem der Ansprüche 1 und 2, dadurch gekennzeichnet, daß es einerseits zwei Tunnel (36) der oben beschriebenen Art und andererseits zwei Schieber (35) der oben beschriebenen Art enthält, die jeweils in einem der beiden Tunnel angeordnet sind, wobei manche vergleichbare Abmessungen der beiden Tunnel und/oder der beiden Schieber unterschiedlich sind.

5. Hydraulisches Antischwingungslager nach einem der vorhergehenden Ansprüche, dadurch gekennzeichnet, daß es ein Lager mit axialer Durchquerung ist, bei dem der mittlere starre Sockel (1) ein inneres Rohrstück, die starre, ringförmige Armatur (2) ein äußeres Rohrstück ist, das das innere Rohrstück umgibt, die beiden elastischen Wandungen (14, 15) Ringe sind, die zwischen den beiden axialen Enden der beiden RohrstücKen eingefügt sind, und die Zwischenwand (16) eine Scheibe ist, die ihrerseits aus einem elastischen Ring (18) und einem starren Ring (17) besteht, die umeinander angeordnet sind.

6. Hydraulisches Antischwingungslager nach Anspruch 5, dadurch gekennzeichnet, daß einerseits die beiden elastischen Ringe (14, 15) radial zwischen den beiden Rohrstücken (1, 2) eingefügt sind, die sie miteinander verbinden, so daß sie während axialer Relativverschiebungen der beiden Rohrstücke im wesentlichen auf Scherung beansprucht werden, und daß andererseits die beiden elastischen Ringe in radialer Richtung vollständig versetzt in bezug auf den elastischen Ring (18) angeordnet sind, der teilweise den Zwischenring bildet, wobei die axialen Projektionen der Ringe und des Ringes sich auch nicht teilweise überdecken.

7. Hydraulisches Antischwingungslager nach einem der vorhergehenden Ansprüche, dadurch gekennzeichnet, daß die Wandungen des Tunnels (36) anders als die Wandung, die teilweise den verengten Durchgang bildet, mit einer Beschichtung (40) aus elastomerem Material bedeckt sind.

8. Hydraulisches Antischwingungslager nach einem der vorhergehenden Ansprüche, dadurch gekennzeichnet, daß der Schieber (35) und/oder die gegenüberliegenden Oberflächen des Tunnels (36) mit einer Schicht bedeckt sind, die einen niedrigen Reibungskoeffizienten aufweist.

## Claims

1. Hydraulic anti-vibration mounting of the axial-movement type, comprising a rigid central seat (1) of a revolution shape about an axis X, a rigid annular fitting (6) with axis X, a first annular resilient partition (14) connecting the seat (1) to the fitting (6), a second resilient partition (15) carried by the fitting (6) and defining with it, the seat and the first partition, a sealed chamber, a partition (16) disposed in the interior of the chamber so as to divide it into two pockets (A, B), a constricted conduit (19) disposed in a rigid portion of the partition, causing the two pockets to intercommunicate permanently, and a liquid mass filling the two pockets as well as the constricted conduit, characterised in that it comprises on the one hand at least one tunnel (36) machined from a rigid portion of the intermediate partition (16) and extending in the arc of a circle centred on the axis X, the two ends of said tunnel communicating respectively with the two chambers (A, B) and, on the other hand, a slide (35) in the shape of a banana lodged in said tunnel and being capable of sliding angularly and freely between the two ends along the latter.

2. Mounting according to claim 1, characterised in that the constricted conduit (19) is substantially defined by a groove extending in the arc of a circle and contained between the slide (35) and the tunnel (36).

3. Mounting according to any one of the preceding claims, characterised in that it comprises on the one hand two tunnels (36) as defined above, each extending in a semicircle and symmetrical with one another with respect to an axial plane and, on the other hand, two slides (35) as defined above, respectively lodged in the two tunnels.

4. Mounting according to any one of claims 1 and 2, characterised in that it comprises on the one hand two tunnels (36) as defined above and, on the other hand, two slides (35) as defined above respectively lodged in the two tunnels, certain of the comparable dimensions of these two tunnels and/or of these two slides being different.

5. Mounting according to any one of the preceding claims, characterised in that it is of the crossing axis type in which the rigid central seat (1) is an internal tube stub, the rigid annular fitting (2) is an external tube stub surrounding the internal tube stub, the two resilient partitions (14, 15) are rings interposed between the two tube stubs, at their two axial ends, and the intermediate partition (16) is a washer which itself comprises a resilient band (18) and a rigid band (17) which mutually surround each other.

6. Mounting according to claim 5, characterised in that, on the one hand, the two resilient rings (14, 15) are interposed radially between the two tube stubs (1, 2) which they interconnect, so as to operate substantially with a shearing action during relative axial displacements of these two stubs, and on the other hand in that these two resilient rings are totally offset radially with respect to the resilient band (18) which in part constitutes the intermediate washer, the axial projections of said rings and of the said band not covering one another, even in part.

7. Mounting according to any one of the preceding claims, characterised in that the partitions, of the tunnel (36), other than those constituting in part the constricted conduit, are covered by a layer (40) of elastomeric material.

8. Mounting according to any one of the preceding claims, characterised in that the slide (35) and/or the opposite faces of the tunnel (36) are covered by a layer with a low coefficient of friction.
